# EUROPÄISCHE PATENTSCHRIFT

(11) **EP 3 746 341 B1**
(45) Veröffentlichungstag und Bekanntmachung des Hinweises auf die Patenterteilung: **15.03.2023**
(21) Anmeldenummer: 18815139.3
(22) Anmeldetag: 30.11.2018
(51) Int. Cl.: B60T 8/172, B60T 13/14, B60T 13/66, B60T 13/68, B60T 17/22, B60T 8/88

(54) **KOMMUNIKATIONSVERFAHREN ZWISCHEN EINEM BREMSKRAFTVERSTÄRKER EINES FAHRZEUGS UND EINEM ESP-STEUERGERÄT DES FAHRZEUGS UND BREMSSYSTEM**
COMMUNICATION METHOD BETWEEN A BRAKE BOOSTER OF A VEHICLE AND AN ESP CONTROL DEVICE OF THE VEHICLE AND BRAKE SYSTEM
PROCÉDÉ DE COMMUNICATION ENTRE UN SERVOFREIN D'UN VÉHICULE ET UN APPAREIL DE COMMANDE DE CONTRÔLE ÉLECTRONIQUE DE STABILITÉ (ESP) DUDIT VÉHICULE ET SYSTÈME DE FREINAGE

(30) Priorität: 30.01.2018 DE 102018201408
(43) Veröffentlichungstag der Anmeldung: 09.12.2020
(73) Patentinhaber: Robert Bosch GmbH, 70442 Stuttgart (DE)
(72) Erfinder: MARQUART, Martin, 78564 Reichenbach (DE); HAAG, Florian, 74199 Untergruppenbach (DE)
(86) Internationale Anmeldenummer: PCT/EP2018/083123
(87) Internationale Veröffentlichungsnummer: WO 2019/149406

(56) Entgegenhaltungen:
- DE-A1-102015 202 337
- DE-A1-102015 224 665
- DE-A1-102015 224 888
- DE-A1-102016 212 412
- US-A1- 2008 154 454

## Beschreibung

### Gebiet der Erfindung

Die Erfindung betrifft ein Kommunikationsverfahren zwischen einem Bremskraftverstärker eines Fahrzeugs und einem ESP-Steuergerät des Fahrzeugs sowie ein entsprechend ausgebildetes Bremssystem.

### Stand der Technik

Komponenten eines Bremssystems eines Fahrzeugs sind über Datenleitungen, wie beispielsweise einen Datenbus des Fahrzeugs miteinander verbunden und können Informationen auf dem Datenbus bereitstellen und Informationen von dem Datenbus einlesen. Bei sicherheitsrelevanten Komponenten können zur Redundanz mehrere Anschlüsse an die Datenleitung vorgesehen sein. Besonders wichtige Informationen können auch über eine zusätzliche reservierte Datenleitung ausgetauscht werden.

DE 10 2016 212412 A1 beschreibt ein Verfahren zum Entlüften eines hydraulischen Bremssystems eines Kraftfahrzeugs. DE 10 2015 224 888 A1 beschreibt ein Verfahren und ein elektronisches Servicegerät zur Bewerkstelligung der Entlüftung eines Fahrzeugbremssystems.

### Offenbarung der Erfindung

Vor diesem Hintergrund werden mit der hier vorgestellten Erfindung ein Kommunikationsverfahren zwischen einem Bremskraftverstärker eines Fahrzeugs und einem ESP-Steuergerät des Fahrzeugs, ein entsprechend ausgebildetes Bremssystem sowie ein entsprechendes Computerprogrammprodukt gemäß den unabhängigen Ansprüchen vorgestellt.

Vorteilhafte Weiterbildungen und Verbesserungen der hier vorgestellten Erfindung sind in den abhängigen Ansprüchen beschrieben.

### Vorteile der Erfindung

Ausführungsformen der vorliegenden Erfindung können in vorteilhafter Weise ermöglichen, ohne zusätzlichen Hardwareaufwand beziehungsweise mit geringem Hardwareaufwand eine meist zwingenderweise bereits im Fahrzeug vorhandene hydraulische Verbindung zwischen einem Bremskraftverstärker eines Fahrzeugs und einem ESP-Steuergerät des Fahrzeugs zur Kommunikation zu nutzen. Die Kommunikation über die Bremsleitung kann als Rückfallebene verwendet werden, wenn eine normale Kommunikation unterbrochen wird, beispielsweise wenn ein Stecker lose ist, einen Wackelkontakt hat oder ein Draht durchtrennt ist oder einen Masseschluss hat.

Es wird ein Kommunikationsverfahren zwischen einem Bremskraftverstärker eines Fahrzeugs und einem ESP-Steuergerät des Fahrzeugs vorgestellt, das dadurch gekennzeichnet ist, dass ein Signal in eine Bremsflüssigkeit eingekoppelt wird, über eine mit der Bremsflüssigkeit gefüllte Bremsleitung zwischen dem Bremskraftverstärker und dem Bremssteuergerät transportiert wird und wieder aus der Bremsflüssigkeit ausgekoppelt wird.

Ideen zu Ausführungsformen der vorliegenden Erfindung können unter anderem als auf den nachfolgend beschriebenen Gedanken und Erkenntnissen beruhend angesehen werden.

Ein Bremskraftverstärker eines Fahrzeugs und ein ESP-Steuergerät des Fahrzeugs sind über zumindest eine Bremsleitung direkt miteinander verbunden. Die Bremsleitung ist ein druckfestes Rohr oder ein druckfester Schlauch. Die Bremsleitung ist mit näherungsweise inkompressibler Bremsflüssigkeit gefüllt. Ein Signal kann durch einen Geber als impulsartige Druck- und/oder Volumenänderung in die Bremsflüssigkeit eingekoppelt werden. Die Volumenänderung resultiert in einem eingeschlossenen Volumen in einer Druckänderung. Die Druckänderung breitet sich in der Bremsflüssigkeit als Druckwelle mit einer spezifischen Schallgeschwindigkeit aus. Die Druckwelle kann durch einen Abnehmer als Volumenänderung oder Positionsänderung aus der Bremsflüssigkeit ausgekoppelt werden. Der Geber kann elektrisch betätigt sein. Der Abnehmer kann wieder ein elektrisches Signal erzeugen.

Das Signal kann am Bremskraftverstärker durch zumindest eine impulsartige Betätigung des Bremskraftverstärkers in die Bremsflüssigkeit eingekoppelt werden. Der Bremskraftverstärker kann als Geber verwendet werden. Der Bremskraftverstärker weist einen steuerbaren Antrieb auf. Der Antrieb wirkt in der Regel auf einen Hauptbremszylinder. Der Hauptbremszylinder kann mit einer hohen Betätigungsgeschwindigkeit und kleiner Amplitude betätigt werden, um zumindest eine Druckwelle in der Bremsflüssigkeit auszulösen. Die Betätigungsgeschwindigkeit kann wesentlich höher sein, als eine bei einer Bremsbetätigung durch einen Fahrer des Fahrzeugs erzeugbare Betätigungsgeschwindigkeit. Die Amplitude kann wesentlich geringer sein, als eine zum Betätigen von Reibungsbremsen des Fahrzeugs notwendige Amplitude am Hauptbremszylinder. Das Signal kann auch eingekoppelt werden, während der Fahrer die Bremse betätigt.

Das Signal kann am ESP-Steuergerät durch einen Drucksensor des ESP-Steuergeräts aus der Bremsflüssigkeit ausgekoppelt werden. Der Drucksensor kann als Abnehmer verwendet werden. Der Drucksensor kann schnelle Druckschwankungen in einem elektrischen Drucksignal abbilden. Der Drucksensor kann auch geringe Druckunterschiede in dem Drucksignal abbilden. Das Drucksignal kann demoduliert werden, um das Signal zu erhalten.

Als Signal kann eine vordefinierte Abfolge von Impulsen in die Bremsflüssigkeit eingekoppelt werden. Durch verschiedene Abfolgen können verschiedene Informationen codiert und übertragen werden. Durch mehrere aufeinander abfolgende Impulse kann das Signal sicher übertragen werden, auch wenn beispielsweise ein störender Impuls das Signal überlagert oder das Signal unvollständig ausgekoppelt wird.

Das Signal kann durch Einkoppeln in die Bremsflüssigkeit auf der Bremsleitung transportiert werden, wenn ein Ausfall eines parallelen Kommunikationswegs über einen Kommunikationsbus des Fahrzeugs erkannt wird. Die Kommunikation über die Bremsleitung kann für Störfälle vorbehalten sein. Alternativ kann im Regelbetrieb zeitgleich über die Bremsleitung und den Kommunikationsbus kommuniziert werden und der Ausfall des Kommunikationsbusses erkannt werden, wenn nur über die Bremsleitung kommuniziert werden kann.

Nachdem der Ausfall erkannt wird, kann eine Wartezeit abgewartet werden, bevor das Signal in die Bremsflüssigkeit eingekoppelt wird. Falls der Kommunikationsbus nur kurzzeitig ausfällt, kann durch die Wartezeit ein Senden widersprüchlicher Signale verhindert werden. Durch die Wartezeit können sich der Bremskraftverstärker und das ESP-Steuergerät synchronisieren.

Im ESP-Steuergerät kann zumindest ein Ventil geschlossen werden, wenn das Signal transportiert wird. Durch das Schließen von Ventilen zu Reibungsbremsen des Bremssystems kann verhindert werden, dass die Reibungsbremsen durch das Signal betätigt werden. Das Ventil kann nach einer geringen Wartezeit oder nachdem das Signal ausgekoppelt worden ist wieder geöffnet werden.

Das Signal kann am Bremskraftverstärker unter Verwendung einer Sendeeinrichtung des Bremskraftverstärkers in die Bremsflüssigkeit eingekoppelt werden. Der Bremskraftverstärker kann eine zusätzliche Sendeeinrichtung aufweisen. Die Sendeeinrichtung kann eine größere Betätigungsgeschwindigkeit als der Bremskraftverstärker aufweisen. Die Sendeeinrichtung kann einen kleineren Hub als der Bremskraftverstärker aufweisen. Die Sendeeinrichtung kann höhere Frequenzen in die Bremsflüssigkeit einkoppeln, als der Bremskraftverstärker. Durch die höheren Frequenzen können mehr Informationen in kürzerer Zeit übertragen werden. Die Sendeeinrichtung kann ein Schallsender, insbesondere ein Ultraschallsender sein.

Das Signal kann am ESP-Steuergerät unter Verwendung einer Empfangseinrichtung des ESP-Steuergeräts aus der Bremsflüssigkeit ausgekoppelt werden. Das ESP-Steuergerät kann eine zusätzliche Empfangseinrichtung aufweisen. Die Empfangseinrichtung kann einen kleineren Hub als der Drucksensor aufweisen. Die Empfangseinrichtung kann höhere Frequenzen aus der Bremsflüssigkeit auskoppeln, als der Drucksensor. Durch die höheren Frequenzen können mehr Informationen in kürzerer Zeit übertragen werden. Die Empfangseinrichtung kann ein Schallempfänger, insbesondere ein Ultraschallempfänger sein.

Das Signal kann am ESP-Steuergerät unter Verwendung einer Sendeeinrichtung des ESP-Steuergeräts in die Bremsflüssigkeit eingekoppelt werden und am Bremskraftverstärker unter Verwendung einer Empfangseinrichtung des Bremskraftverstärkers aus der Bremsflüssigkeit ausgekoppelt werden. Das Signal kann auch von dem ESP-Steuergerät gesendet werden und von dem Bremskraftverstärker empfangen werden. So ist auch in der Gegenrichtung Kommunikation möglich. Signale können auch in beide Richtungen durch die Bremsflüssigkeit transportiert werden. Dazu können der Bremskraftverstärker und das ESP-Steuergerät Sendeempfangseinrichtungen aufweisen. Die Sendeempfangseinrichtungen können beispielsweise Ultraschallschwinger sein.

Das Verfahren kann beispielsweise in Software oder Hardware oder in einer Mischform aus Software und Hardware beispielsweise in einem Steuergerät implementiert sein.

Der hier vorgestellte Ansatz schafft ferner ein Bremssystem, das dazu ausgebildet ist, um die Schritte einer Variante des hier vorgestellten Verfahrens in entsprechenden Einrichtungen durchzuführen, anzusteuern bzw. umzusetzen.

Komponenten des Bremssystems können über eigenständige Steuerlogiken angesteuert werden. Beispielsweise kann der Bremskraftverstärker über eine Bremskraftverstärkersteuerlogik angesteuert werden. Das ESP-Steuergerät kann über eine Steuerlogik angesteuert werden. Eine Steuerlogik kann ein elektrisches Gerät mit zumindest einer Recheneinheit zum Verarbeiten von Signalen oder Daten, zumindest einer Speichereinheit zum Speichern von Signalen oder Daten, und zumindest einer Schnittstelle und/oder eine Kommunikationsschnittstelle zum Einlesen oder Ausgeben von Daten, die in ein Kommunikationsprotokoll eingebettet sind, sein. Die Recheneinheit kann beispielsweise ein Signalprozessor, ein sogenannter System-ASIC oder ein Mikrocontroller zum Verarbeiten von Sensorsignalen und Ausgeben von Datensignalen in Abhängigkeit von den Sensorsignalen sein. Die Speichereinheit kann beispielsweise ein Flash-Speicher, ein EPROM oder eine magnetische Speichereinheit sein. Die Schnittstelle kann als Sensorschnittstelle zum Einlesen der Sensorsignale von einem Sensor und/oder als Aktorschnittstelle zum Ausgeben der Datensignale und/oder Steuersignale an einen Aktor ausgebildet sein. Die Kommunikationsschnittstelle kann dazu ausgebildet sein, die Daten drahtlos und/oder leitungsgebunden einzulesen oder auszugeben. Die Schnittstellen können auch Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt ein Blockschaltbild eines Bremssystems eines Fahrzeugs; und
Fig. 2 zeigt eine Darstellung eines Druckverlaufs einer hydraulischen Kommunikation gemäß einem Ausführungsbeispiel.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

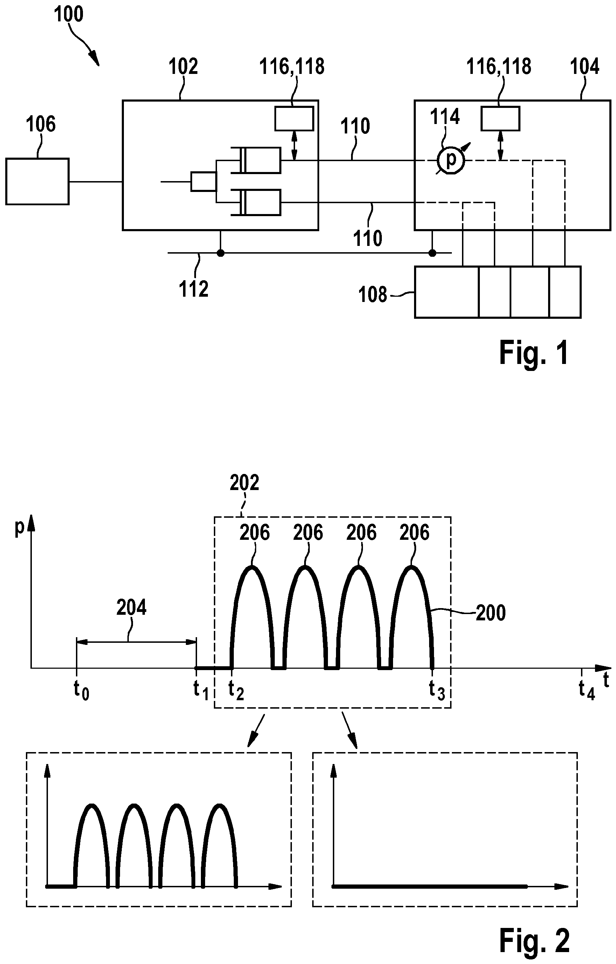

Fig. 1 zeigt ein Blockschaltbild eines Bremssystems 100 eines Fahrzeugs. Das Bremssystem 100 weist als Komponenten einen Bremskraftverstärker 102 und ein ESP-Steuergerät 104 auf. Der Bremskraftverstärker 102 ist mit einem Bremspedal 106 des Fahrzeugs mechanisch gekoppelt. Das ESP-Steuergerät 104 ist hydraulisch mit Reibungsbremsen 108 des Fahrzeugs gekoppelt. Der Bremskraftverstärker 102 wirkt auf einen Hauptbremszylinder des Bremssystems. Der Bremskraftverstärker 102 ist über zwei Bremsleitungen 110 mit dem ESP-Steuergerät 104 verbunden. Jede Bremsleitung 110 versorgt einen Bremskreis des Bremssystems 100. Der Bremskraftverstärker 102 bewegt pro Bremskreis je einen Kolben des Hauptbremszylinders. Wenn die Kolben bewegt werden, wird Bremsflüssigkeit aus dem Hauptbremszylinder zu dem ESP-Steuergerät 104 verschoben. Im ESP-Steuergerät 104 wird die Bremsflüssigkeit auf die Reibungsbremsen 108 aufgeteilt. Die verschobene Bremsflüssigkeit bewegt Bremskolben der Reibungsbremsen 108. Wenn eine Bewegung der Bremskolben durch einen Kontakt der Bremsbeläge mit den Bremsscheiben beziehungsweise Bremstrommeln gestoppt wird, baut sich im Bremssystem 100 ein Bremsdruck auf. Das hier dargestellte Bremssystem 100 bremst pro Bremskreis zwei Räder des Fahrzeugs.

Der Bremskraftverstärker 102 ist ferner über einen Datenbus 112 des Fahrzeugs mit dem ESP-Steuergerät 104 verbunden. Im Regelbetrieb werden über den Datenbus 112 Daten zwischen dem Bremskraftverstärker 102 und dem ESP-Steuergerät 104 ausgetauscht. Der Datenbus 112 ist beispielsweise ein CAN-Bus des Fahrzeugs.

Bei dem hier vorgestellten Ansatz wird das Bremssystem 100 so angesteuert, dass ein Signal von zumindest einer der Komponenten in die Bremsflüssigkeit eingekoppelt wird, über die Bremsleitung 110 übertragen wird und von der anderen Komponente aus der Bremsflüssigkeit ausgekoppelt und ausgewertet wird.

In einem Ausführungsbeispiel wird der Bremskraftverstärker 102 betätigt, um über den Hauptbremszylinder das Signal in die Bremsflüssigkeit einzukoppeln. Das ESP-Steuergerät 104 koppelt das Signal unter Verwendung eines in einem der Bremskreise angeordneten Drucksensors 114 aus der Bremsflüssigkeit aus. Wenn das ESP-Steuergerät 104 das Signal empfängt, ist sicher, dass der Bremskraftverstärker 102 funktioniert.

Wenn der Bremskraftverstärker 102 und/oder das ESP-Steuergerät 104 keine Daten insbesondere der jeweils anderen Komponente über den Datenbus 112 empfangen können, wird eine Störung erkannt. Die Störung kann als Ursache einen Defekt des Datenbusses 112 und/oder einen Defekt der jeweils anderen Komponente haben. Wenn trotzdem das Signal des Bremskraftverstärkers 102 empfangen werden kann, wird erkannt, dass der Bremskraftverstärker 102 seine Aufgabe weiterhin erfüllen kann und das ESP-Steuergerät 104 weiter betrieben werden kann, wie bisher.

Wenn das ESP-Steuergerät 104 weder über den Datenbus 112 noch über die Bremsleitungen 110 ein Signal empfängt, ist mit hoher Wahrscheinlichkeit der Bremskraftverstärker 102 defekt. Dann kann das ESP-Steuergerät 104 über seine Pumpen zumindest einen Teil der Bremskraftverstärkung übernehmen.

In einem Ausführungsbeispiel weist der Bremskraftverstärker 102 eine Sendeeinrichtung 116 zum Einkoppeln des Signals in die Bremsflüssigkeit auf. Als Signal koppelt die Sendeeinrichtung 116 Schallwellen in die Bremsflüssigkeit ein. Die Schallwellen können von dem Drucksensor 114 empfangen werden. Alternativ weist das ESP-Steuergerät 104 in einem Ausführungsbeispiel eine Empfangseinrichtung 118 zum Auskoppeln des Signals aus der Bremsflüssigkeit auf. Die Schallwellen können in verschiedenen Frequenzen in die Bremsflüssigkeit eingekoppelt werden. Beispielsweise können Ultraschallwellen als Signalträger in die Bremsflüssigkeit eingekoppelt werden.

In einem Ausführungsbeispiel weist das ESP-Steuergerät 104 alternativ oder ergänzend eine Sendeeinrichtung 116 auf, während der Bremskraftverstärker 102 eine Empfangseinrichtung 118 aufweist. In diesem Ausführungsbeispiel kann das Signal über die Bremsflüssigkeit von dem ESP-Steuergerät 104 zu dem Bremskraftverstärker 102 übertragen werden. Durch unterschiedliche Frequenzbereiche für die Transportrichtungen kann interferenzfrei in beide Transportrichtungen kommuniziert werden.

Mit anderen Worten ist ein Bremsregelsystem aus einem elektromechanischen Bremskraftverstärker 102 und einem ESP aufgebaut. Bei einem solchen Bremsregelsystem kann eine redundante Kommunikation zwischen elektromechanischem Bremskraftverstärker 102 und ESP erfolgen. Hierbei wird parallel zum Kommunikationsbus (z.B. CAN), über den alle Informationen gesendet werden, eine zusätzliche Leitung verwendet, auf der ein reduzierter Signalumfang übertragen wird. Die zusätzliche Informationsübertragung ermöglicht auf ESP Seite eine eindeutige Identifikation für die Ursache eines Ausbleibens des Bussignals. Entweder dies wird durch einen Ausfall des elektromechanischen Bremskraftverstärkers 102 (der Sender dieses Signals) verursacht oder es ist lediglich der Übertragungsweg vom Ausfall betroffen. In diesem Fall ist der elektromechanische Bremskraftverstärker 102 intakt. Die Unterscheidung dieser beiden Fälle ermöglicht es im ESP optimal zu reagieren. Ist der Bremskraftverstärker 102 intakt, verhält sich das ESP passiv. Ist jedoch der Ausfall des Bremskraftverstärkers 102 die Ursache für den Ausfall der Buskommunikation, so wird die Bremskraftverstärkung stattdessen vom ESP realisiert. Das Fahrzeug wird so weder unter- noch überbremst.

Durch den hier vorgestellten Ansatz wird ein günstiges Konzept zur redundanten Kommunikation definiert.

Die redundante Kommunikation kann auch über eine zusätzliche elektrische Leitung realisiert sein. Bei dem hier vorgestellten Ansatz fungiert die Bremsflüssigkeit als die redundante Leitung, über die eine hydraulische Kommunikation erfolgt. Hierzu sind die bereits vorhandenen Bestandteile des Bremsregelsystems ausreichend. Eine Umsetzung ausschließlich über Softwareänderungen ist möglich.

Durch die hydraulische Kommunikation wird im Falle eines Ausfalls der Buskommunikation zwischen dem Bremskraftverstärker 102 und dem ESP die Information übertragen, ob der Bremskraftverstärker 102 funktionsfähig ist. Liegt die Ursache für einen Ausfall der Buskommunikation beispielsweise in einem defekten Microcontroller auf Seiten des Bremskraftverstärkers 102, so bewirkt dies gleichzeitig ein Ausbleiben der Bremskraftverstärkung. Ist die Ursache aber ein abgerissenes Buskabel, so bleibt die Verstärkung der Bremskraft in diesem Fall erhalten. Die Unterscheidung dieser Fälle ermöglicht es, die bestmögliche Entscheidung im ESP für die Übernahme der Bremskraftverstärkung zu treffen.

Fig. 2 zeigt eine Darstellung eines Druckverlaufs 200 einer hydraulischen Kommunikation gemäß einem Ausführungsbeispiel. Der Druckverlauf 200 kann beispielsweise an einem Drucksensor eines ESP-Steuergeräts, wie es in Fig. 1 dargestellt ist, aus der Bremsflüssigkeit ausgekoppelt werden. Der Druckverlauf 200 ist in einem Diagramm dargestellt, das auf seiner Abszisse die Zeit t und auf seiner Ordinate den Druck p aufgetragen hat.

Hier ist eine Datenübertragung auf einem Datenbus des Fahrzeugs gestört. Zu einem Störungszeitpunkt t0 erkennt das ESP-Steuergerät, dass über den Datenbus keine Daten mehr empfangen werden können. Zu einem dem Störungszeitpunkt t0 nachfolgenden ersten Zeitpunkt t1 startet das hier vorgestellte Kommunikationsverfahren und das ESP-Steuergerät wartet auf ein von dem Bremskraftverstärker über die Bremsflüssigkeit gesendetes Signal 202.

Wenn der Bremskraftverstärker zum Störungszeitpunkt t0 funktionsfähig ist und die Störung erkennt, startet auch am Bremskraftverstärker zum ersten Zeitpunkt t1 das hier vorgestellte Kommunikationsverfahren. Dabei koppelt der Bremskraftverstärker das Signal 202 in die Bremsflüssigkeit ein. Nach einer durch eine Leitungslänge der Bremsleitung und die spezifische Schallgeschwindigkeit in der Bremsflüssigkeit bestimmten Laufzeit zu einem späteren zweiten Zeitpunkt t2 kommt das Signal 202 am ESP-Steuergerät an und wird aus der Bremsflüssigkeit ausgekoppelt. Das ESP-Steuergerät erkennt am Signal 202, dass der Bremskraftverstärker funktionstüchtig ist und lediglich ein Datenbus Kommunikationsausfall vorliegt. Zu einem nachfolgenden dritten Zeitpunkt t3 endet die Ankunft des Signals 202.

Wenn der Bremskraftverstärker defekt ist, kommt zum zweiten Zeitpunkt t2 kein Signal am Drucksensor des ESP-Steuergeräts an. Wenn bis zu einem nachfolgenden vierten Zeitpunkt t4 kein Signal empfangen worden ist, erkennt das ESP-Steuergerät eine Störung des Bremskraftverstärkers und beendet das Warten auf das Signal 202.

In einem Ausführungsbeispiel wird von dem Bremskraftverstärker und dem ESP-Steuergerät nach dem Störungszeitpunkt t0 eine Wartezeit 204 gewartet, bis das Kommunikationsverfahren zu dem ersten Zeitpunkt t1 gestartet wird. Die Wartezeit 204 kann als Debouncezeit bezeichnet werden. Wenn innerhalb der Wartezeit die Kommunikation über den Datenbus wieder als funktionsfähig erkannt wird, kann auf den Start des Kommunikationsverfahrens zum ersten Zeitpunkt t1 verzichtet werden.

In einem Ausführungsbeispiel werden direkt nach dem ersten Zeitpunkt t1 im ESP-Steuergerät Ventile zu den Reibungsbremsen geschlossen. Dadurch wird das Volumen Bremsflüssigkeit zwischen dem Bremskraftverstärker und dem ESP-Steuergerät eingeschlossen. Beim Einkoppeln des Signals 202 in die eingeschlossene Bremsflüssigkeit resultieren so hohe Drücke am Drucksensor. Nachdem das erwartete Signal 202 ausgekoppelt worden ist, werden nach dem dritten Zeitpunkt t3 die Ventile wieder geöffnet.

In einem Ausführungsbeispiel werden als das Signal 202 mehrere aufeinanderfolgende Impulse 206 in die Bremsflüssigkeit eingekoppelt und am Drucksensor wieder aus der Bremsflüssigkeit ausgekoppelt. Über unterschiedliche Impulsfolgen können in dem Signal 202 unterschiedliche Informationen transportiert werden. Hier werden die Impulse 206 beispielsweise in regelmäßigen Abständen in die Bremsflüssigkeit eingekoppelt. Die Abstände zwischen den Impulsen können kleiner sein, als sie beispielsweise durch eine zittrige Bedienung durch den Fahrer resultieren können. Dadurch kann ein vom Fahrer verursachter Bremsimpuls sicher von dem Signal 202 unterschieden werden.

Mit anderen Worten zeigt Fig. 2 ein Beispiel für die Realisierung einer hydraulischen Kommunikation. Nach dem Erkennen eines Busausfalls auf Seiten des elektromechanischen Bremskraftverstärkers und dem Verstreichen einer Debouncezeit wird ein charakteristischer Druckaufbau und -abbau durchgeführt. Dies kann beispielsweise durch eine hochfrequente Aktuierung im Sägezahnprofil oder entsprechend der Darstellung in Fig. 2 erfolgen. Durch die hochfrequente Ansteuerung kann ausgeschlossen werden, dass dieser Druckaufbau und - abbau durch den Fahrer generiert wurde. Die Möglichkeit des Druckaufbaus und -abbaus durch den Fahrer kann deshalb ausgeschlossen werden, da der Fahrer physikalisch nicht in der Lage ist eine solch hochfrequente Druckänderung zu erzeugen. Die Ansteuerung kann beispielsweise in einem Frequenzbereich zwischen fünf und 100 Hertz erfolgen. In einem Ausführungsbeispiel erfolgt die Ansteuerung mit 10 Hz.

Im ESP wird nach dem Erkennen des Ausfalls der Buskommunikation zum elektromechanischen Bremskraftverstärker der gemessene Druck auf die charakteristische hochfrequente Ansteuerung überwacht. Wird die charakteristische Ansteuerung erkannt, so kann daraus auf die Funktionsfähigkeit des Bremskraftverstärkers geschlossen werden. Bleibt das charakteristische Drucksignal aus, so ist der Bremskraftverstärker nicht funktionsfähig.

Um eine unerwünschte Rückwirkung der hochfrequenten Ansteuerung auf das Fahrzeugverhalten zu unterbinden, können im ESP für die Dauer dieser Ansteuerung die Ventile in Richtung der Räder geschlossen werden. Hierdurch erreicht der vom Bremskraftverstärker generierte Druck die Räder nicht. Es wird also keine Bremswirkung erzielt. Da diese Maßnahme auch verhindern würde, dass ein vom Fahrer bei einer Bremsbetätigung generierter Druck eine Bremswirkung erzielt, können die Ventile bei einer Erkennung einer Pedalbetätigung unmittelbar wieder geöffnet werden. Zusätzlich kann die hydraulische Kommunikation auf ein minimales Zeitfenster begrenzt werden.

Die hydraulische Kommunikation kann beispielsweise nur einmalig direkt nach dem Ausfall der Buskommunikation erfolgen, da nur mit einer sehr geringen Wahrscheinlichkeit im weiteren Betriebsverlauf ein zusätzlicher Fehler auftritt.

Wenn der Fahrer im Moment des Kommunikationsausfalls bereits das Pedal betätigt, kann das Signal auf den Fahrerbremswunsch addiert werden. Im ESP kann somit der vom Fahrer erzeugte Druckverlauf plus die hochfrequente Ansteuerung durch die hydraulische Kommunikationsfunktion beobachtet werden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Kommunikationsverfahren zwischen einem Bremskraftverstärker (102) eines Fahrzeugs und einem ESP-Steuergerät (104) des Fahrzeugs, wobei ein Signal (202) in eine Bremsflüssigkeit eingekoppelt wird, über eine mit der Bremsflüssigkeit gefüllte Bremsleitung (110) zwischen dem Bremskraftverstärker (102) und dem ESP-Steuergerät (104) transportiert wird und wieder aus der Bremsflüssigkeit ausgekoppelt wird **dadurch gekennzeichnet, dass** das Signal (202) durch Einkoppeln in die Bremsflüssigkeit auf der Bremsleitung (110) transportiert wird, wenn ein Ausfall eines parallelen Kommunikationswegs über einen Kommunikationsbus (112) des Fahrzeugs erkannt wird.

2. Kommunikationsverfahren gemäß Anspruch 1, bei dem das Signal (202) am Bremskraftverstärker (102) durch zumindest eine impulsartige Betätigung des Bremskraftverstärkers (102) in die Bremsflüssigkeit eingekoppelt wird.

3. Kommunikationsverfahren gemäß einem der vorhergehenden Ansprüche, bei dem das Signal (202) am ESP-Steuergerät (104) durch einen Drucksensor (114) des ESP-Steuergeräts (104) aus der Bremsflüssigkeit ausgekoppelt wird.

4. Kommunikationsverfahren gemäß einem der vorhergehenden Ansprüche, bei dem als Signal (202) eine vordefinierte Abfolge von Impulsen (206) in die Bremsflüssigkeit eingekoppelt wird.

5. Kommunikationsverfahren gemäß einem der vorhergehenden Ansprüche, bei dem nachdem der Ausfall erkannt wird eine Wartezeit (204) abgewartet wird bevor das Signal (202) in die Bremsflüssigkeit eingekoppelt wird.

6. Kommunikationsverfahren gemäß einem der vorhergehenden Ansprüche, bei dem im ESP-Steuergerät (104) zumindest ein Ventil geschlossen wird, wenn das Signal (202) transportiert wird.

7. Kommunikationsverfahren gemäß einem der vorhergehenden Ansprüche, bei dem das Signal (202) am Bremskraftverstärker (102) unter Verwendung einer Sendeeinrichtung (116) des Bremskraftverstärkers (102) in die Bremsflüssigkeit eingekoppelt wird.

8. Kommunikationsverfahren gemäß einem der vorhergehenden Ansprüche, bei dem das Signal am ESP-Steuergerät (104) unter Verwendung einer Empfangseinrichtung (118) des ESP-Steuergeräts (104) aus der Bremsflüssigkeit ausgekoppelt wird.

9. Kommunikationsverfahren gemäß einem der vorhergehenden Ansprüche, bei dem das Signal (202) am ESP-Steuergerät (104) unter Verwendung einer Sendeeinrichtung (116) des ESP-Steuergeräts (104) in die Bremsflüssigkeit eingekoppelt wird und am Bremskraftverstärker (102) unter Verwendung einer Empfangseinrichtung (118) des Bremskraftverstärkers (102) aus der Bremsflüssigkeit ausgekoppelt wird.

10. Bremssystem, das dazu ausgebildet ist, das Verfahren gemäß einem der vorhergehenden Ansprüche in entsprechenden Einrichtungen auszuführen, umzusetzen und/oder anzusteuern

11. Computerprogrammprodukt, das dazu ausgebildet ist, das Verfahren gemäß einem der Ansprüche 1 bis 9 in entsprechenden Computereinrichtungen auszuführen, umzusetzen und/oder anzusteuern.

12. Maschinenlesbares Speichermedium, auf dem das Computerprogrammprodukt gemäß Anspruch 11 gespeichert ist.

## Claims

1. Communication method between a brake booster (102) of a vehicle and an ESP control unit (104) of the vehicle, wherein a signal (202) is coupled into a brake fluid, is transported between the brake booster (102) and the ESP control unit (104) via a brake line (110) filled with the brake fluid and is decoupled from the brake fluid again, **characterized in that** the signal (202) is transported on the brake line (110) by being coupled into the brake fluid when a failure of a parallel communication path over a communication bus (112) of the vehicle is detected.

2. Communication method according to Claim 1, in which the signal (202) is coupled into the brake fluid at the brake booster (102) by way of at least one pulsed actuation of the brake booster (102).

3. Communication method according to either of the preceding claims, in which the signal (202) is decoupled from the brake fluid at the ESP control unit (104) by a pressure sensor (114) of the ESP control unit (104).

4. Communication method according to one of the preceding claims, in which a predefined sequence of pulses (206) is coupled into the brake fluid as the signal (202) .

5. Communication method according to one of the preceding claims, in which, after the failure is detected, a waiting time (204) is observed before the signal (202) is coupled into the brake fluid.

6. Communication method according to one of the preceding claims, in which at least one valve in the ESP control unit (104) is closed when the signal (202) is transported.

7. Communication method according to one of the preceding claims, in which the signal (202) is coupled into the brake fluid at the brake booster (102) using a transmitting device (116) of the brake booster (102).

8. Communication method according to one of the preceding claims, in which the signal is decoupled from the brake fluid at the ESP control unit (104) using a receiving device (118) of the ESP control unit (104).

9. Communication method according to one of the preceding claims, in which the signal (202) is coupled into the brake fluid at the ESP control unit (104) using a transmitting device (116) of the ESP control unit (104) and is decoupled from the brake fluid at the brake booster (102) using a receiving device (118) of the brake booster (102) .

10. Brake system which is designed to perform, implement and/or control the method according to one of the preceding claims in corresponding devices.

11. Computer program product which is designed to perform, implement and/or control the method according to one of Claims 1 to 9 in corresponding computer devices.

12. Machine-readable storage medium on which the computer program product according to Claim 11 is stored.

## Revendications

1. Procédé de communication entre un servofrein (102) d'un véhicule et un appareil de commande ESP (104) du véhicule, dans lequel un signal (202) est injecté dans un liquide de frein, est transporté par l'intermédiaire d'une conduite de frein (110) remplie de liquide de frein entre le servofrein (102) et l'appareil de commande ESP (104), et est à nouveau extrait du liquide de frein,
**caractérisé en ce que** le signal (202) est transporté dans la conduite de frein (110) en étant injecté dans le liquide de frein si une défaillance d'une voie de communication parallèle est identifiée par l'intermédiaire d'un bus de communication (112) du véhicule.

2. Procédé de communication selon la revendication 1, dans lequel le signal (202) est injecté dans le liquide de frein au niveau du servofrein (102) par au moins un actionnement pulsé du servofrein (102).

3. Procédé de communication selon l'une quelconque des revendications précédentes, dans lequel le signal (202) est extrait du liquide de frein au niveau de l'appareil de commande ESP (104) par un capteur de pression (114) de l'appareil de commande ESP (104).

4. Procédé de communication selon l'une quelconque des revendications précédentes, dans lequel une séquence prédéfinie d'impulsions (206) est injectée comme signal (202) dans le liquide de frein.

5. Procédé de communication selon l'une quelconque des revendications précédentes, dans lequel, après que la défaillance a été identifiée, un délai d'attente (204) est respecté avant que le signal (202) ne soit injecté dans le liquide de frein.

6. Procédé de communication selon l'une quelconque des revendications précédentes, dans lequel au moins une vanne est fermée dans l'appareil de commande ESP (104) lorsque le signal (202) est transporté.

7. Procédé de communication selon l'une quelconque des revendications précédentes, dans lequel le signal (202) est injecté dans le liquide de frein au niveau du servofrein (102) en utilisant un dispositif émetteur (116) du servofrein (102).

8. Procédé de communication selon l'une quelconque des revendications précédentes, dans lequel le signal est extrait du liquide de frein au niveau de l'appareil de commande ESP (104) en utilisant un dispositif récepteur (118) de l'appareil de commande ESP (104).

9. Procédé de communication selon l'une quelconque des revendications précédentes, dans lequel le signal (202) est injecté dans le liquide de frein au niveau de l'appareil de commande ESP (104) en utilisant un dispositif émetteur (116) de l'appareil de commande ESP (104), et est extrait du liquide de frein au niveau du servofrein (102) en utilisant un dispositif récepteur (118) du servofrein (102).

10. Système de freinage qui est réalisé pour exécuter, mettre en oeuvre et/ou piloter le procédé selon l'une quelconque des revendications précédentes sur des dispositifs adéquats.

11. Produit de programme informatique qui est réalisé pour exécuter, mettre en œuvre et/ou piloter le procédé selon l'une quelconque des revendications 1 à 9 sur des dispositifs informatiques adéquats.

12. Support de stockage lisible par machine sur lequel est stocké le produit de programme informatique selon la revendication 11.
